(19) Europäisches Patentamt / European Patent Office / Office européen des brevets

(11) **EP 3 083 231 B1**

(12) **EUROPEAN PATENT SPECIFICATION**

(45) Date of publication and mention of the grant of the patent:
**03.06.2020 Bulletin 2020/23**

(21) Application number: **14815712.6**

(22) Date of filing: **18.12.2014**

(51) Int Cl.:
**B32B 5/12** *(2006.01)*    **B32B 5/22** *(2006.01)*
**B64D 45/02** *(2006.01)*   **C08J 5/04** *(2006.01)*
**C08J 5/24** *(2006.01)*    **H01B 3/00** *(2006.01)*

(86) International application number:
**PCT/EP2014/078456**

(87) International publication number:
**WO 2015/091794 (25.06.2015 Gazette 2015/25)**

(54) **COMPOSITE STRUCTURE**

VERBUNDSTOFFSTRUKTUR

STRUCTURE COMPOSITE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.12.2013 GB 201322767**

(43) Date of publication of application:
**26.10.2016 Bulletin 2016/43**

(73) Proprietor: **Hexcel Composites Limited**
**Duxford, Cambridgeshire CB22 4QB (GB)**

(72) Inventor: **TILBROOK, David**
**Duxford**
**Cambridgeshire CB22 4QD (GB)**

(74) Representative: **Eddowes, Simon**
**Hexcel Composites Limited**
**c/o The Stackyard**
**Park Lane**
**Skillington, NG33 5HH (GB)**

(56) References cited:
**WO-A1-2007/123700     WO-A1-2008/056123**
**WO-A1-2010/035021     WO-A1-2011/114140**

## Description

## INTRODUCTION

The present invention relates to a composite structure and a method for providing electrically conductive pathways in the composite, particularly but not exclusively for airframe structures.

## BACKGROUND

Aircraft are vulnerable to lightning strike. Commercial aircraft, for example, are typically struck once or twice a year. Unlike their metal counterparts, composite structures in aircraft do not readily conduct away the extreme electrical currents and electromagnetic forces generated by lightning strikes. Composite materials are either not conductive at all (e.g., fiberglass) or are significantly less conductive than metals (e.g., carbon fiber), so current from a lightning strike seeks the metal paths available. For that reason, lightning strike protection (LSP) has been a significant concern since the first composites were used on aircraft more than 30 years ago.

If a lightning bolt strikes an unprotected structure, up to 200,000 A of electric current seeks the path of least resistance. In the process, it may vaporize metal control cables, weld hinges on control surfaces and explode fuel vapors within fuel tanks if current arcs through gaps around fasteners and also between areas of exposed edges which are at different electrical potentials (known as edge glow). These direct effects also typically include vaporization of resin in the immediate strike area, with possible burn-through of the laminate. Other potentially hazardous direct effects of a strike can include, ejection of hot gases or hot particles into the body of an aircraft structure and sparking. Indirect effects occur when magnetic fields and electrical potential differences in the structure induce transient voltages, which can damage and even destroy onboard electronics that have not been EMF (electromagnetic field) shielded or lightning protected. The need for protection of composite structures has prompted development of a number of specialized LSP materials.

Conventional LSP strategies have three goals: provide adequate conductive paths so that lightning current remains on the structure's exterior; eliminate gaps in this conductive path to prevent arcing at attachment points and ignition of fuel vapors; and protect wiring, cables and sensitive equipment from damaging surges or transients through careful grounding, EMF shielding and application of surge suppression devices where necessary.

Traditionally, conductive paths in composite structures have been established in one of the following ways: (1) bonding metal foil to the structure as the outside ply; (2) bonding aluminium or copper mesh to the structure either as the outside ply or embedded one ply down; or (3) incorporating strands of conductive material into the laminate. All require connecting the conductive pathways to the rest of the aircraft in order to give the current an ample number of routes to safely exit the aircraft. This is typically achieved by using metal bonding strips (i.e., electrical bonding) to connect the conductive surface layer to an internal "ground plane," which includes metal components such as engines, conduit, etc. Because lightning strikes can attach to metal fasteners in composite structures, it may be desirable to prevent arcing or sparking between them by encapsulating fastener nuts or sleeves with plastic caps or polysulfide coatings.

For external surface protection, a number of metal and metallized fiber products have been developed, typically woven and nonwoven screens and expanded foils. These mesh-like products enable the lightning's current to quickly transmit across the structure's surface, reducing its focus. Aluminum wire was one of the first LSP materials, interwoven with carbon fiber as part of the laminate. However, using aluminum with carbon fiber risked galvanic corrosion. Copper wires relieve the threat of galvanic corrosion but are three times as heavy as aluminum. As fiberglass composites gained usage in aircraft, the industry investigated foils and then expanded foils, which can be cocured with the laminate's exterior ply. Coated fibers (nickel or copper electrodeposited onto carbon and other fibers) also are used but perform much better in EMF shielding applications than as direct lightning strike protection.

Astrostrike aluminum mesh is produced by Astroseal Products (Chester, Conn.) from a solid foil, which is then perforated and expanded to increase formability and augment adhesion to composite structures.

A number of suppliers provide expanded foils, which do not require a more costly weaving process to produce and reportedly offer greater drapability and conformability than wovens. Dexmet (Naugatuck, Conn.) supplies a large variety of conductive metal products for aircraft, including aluminum, copper, phosphorous bronze, titanium and other materials.

Strikegrid is a phosphoric acid-anodized continuous expanded aluminum foil (CEAF) product supplied by Alcore (Edgewood, Md.), part of the M.C. Gill Corp. group of companies. It claims superior corrosion resistance and environmental longevity due to a proprietary coating. It is supplied on continuous rolls in 24 inch to 36 inch (610 mm to 914 mm) widths and in 2-mil and 4-mil thicknesses.

Aluminum LSP mesh is also supplied by ECC GmbH & Co. KG (formerly C. Cramer & Co., Heek-Nienborg, Germany).

Among the more recent developments are "all-in-one" LSP prepregs, which contain pre-embedded woven or nonwoven metal meshes. Applied first-down in layups, the products significantly reduce kitting and manufacturing costs, according to their suppliers.

Strike Guard LSP prepreg is manufactured by APCM (Plainfield, Conn.), and sold through and supported by partner/distributor Advanced Materials and Equipment (Barkhamsted, Conn.). APCM's LSP prepregs are made from either woven or nonwoven metal mesh impregnated with hot-melt adhesive resins that are modified with additives to enhance conductivity of the matrix, making the entire prepreg a conductive system. Metal mesh options include copper, aluminum, phosphor bronze and nickel/copper-coated polyester fiber in various sizes, ranging in weight from 0.08 lb/ft2 to 0.060 lb/ft2. Prepregs also are available with a lightweight nonwoven fiberglass veil that enhances surface finish, reducing porosity and secondary finishing required prior to painting.

Henkel Corp.'s (Bay Point, Calif.) LSP surfacing film combines its SynSkin composite surfacing film and Hysol film adhesives with Astroseal's lightweight conductive Astrostrike screens to provide a family of lightning strike surfacing layers. The screens also reduce the cost of surface preparation for painting, lower raw material part numbers and kitting time, and can be cocured with prepregs. SynSkin's unique combination of filler materials and resin matrix reportedly makes it nearly impossible to sand through once cured, offering dramatically better protection of the conductive screen during sand-and-fill operations than all-epoxy film adhesives.

Cytec Engineered Materials (Tempe, Ariz.) also produces LSP products in the form of SURFACE MASTER 905 composite surfacing film.

LSP products provide sufficient protection only when adequately incorporated into an aircraft's overall protective system. When the composite wings, fuselage skins and horizontal stabilizers are layed up, a copper tang (a thin or pointed projection that serves as an attachment point) is placed as a conductive hard point within the laminate, contacting not only the embedded copper mesh but also the bonding straps that bridge the gap between fuselage and wing.

For its composites-intensive midsize 787 commercial passenger jet, The Boeing Co. (Seattle, Wash.) has developed a multilayered approach to its lightning strike protection strategy. Boeing uses a thin metal mesh or foil in the outer layers of the composite fuselage and wings to quickly dissipate and route charge overboard and shield onboard electronics. To avoid slight gaps between wing-skin fasteners and their holes, which could enable sparking, Boeing installs each fastener precisely and then seal it on the inside. Boeing uses non-conductive filler or glass fiber to seal edges where wing skins meet internal spars in order to prevent gaps, which could permit electrons to spray out during a lightning strike, a phenomenon referred to as "edge glow." In the fuel tanks, Boeing eliminates the threat of exploding fuel vapors by installing a nitrogen-generating system (NGS) that minimizes flammable vapors in wing tanks by filling the space with inert nitrogen gas.

WO2010035021 discloses a prepreg comprising resin and at least one fibre layer, and further comprising an electrically insulating layer and an electrically conducting layer, and particularly wherein the conductive layer is at or near the top surface, beneath that is the insulating layer and beneath that is a fibre/resin interleaf structure.

WO2011114140 discloses a prepreg comprising a structural layer of conductive fibres comprising thermosetting resin in the interstices, and a first outer layer of resin comprising thermosetting resin, and comprising a population of conductive free filaments located at the interface between the structural layer and the outer resin layer which, when cured under elevated temperature, produces a cured composite material comprising a cured structural layer of packed conductive fibres and a first outer layer of cured resin, the outer layer of cured resin comprising a proportion of the population of conductive free filaments dispersed therein; and also a process for manufacturing prepregs wherein the electrically conductive fibres pass a fibre disrupting means to cause a proportion of the fibres on an external face of the sheet to become free filaments.

Conventionally the focus in LSP has been to increase the electrical conductivity of the composite structure. However, it is also important to protect critical parts of the aircraft.

The present invention aims to obviate and/or mitigate the above described problems and/or to provide improvements generally.

## SUMMARY OF THE INVENTION

According to the invention there is provided a composite structure and a method as defined in any one of the accompanying claims.

When fibre reinforced parts containing conductive fibres such as carbon fibers are assembled into composite structures with metallic fasteners, there is potential for lightning strike discharges directly onto any fastener exposed to the outside of the aircraft. Conductive fibres which are directly in contact with a struck fastener can therefore experience a very rapid increase in electrical charge. This can in some instances result in the development of very strong electrical fields and potentials at any exposed fibre ends present on internal surfaces of the structure. If the field is high enough to exceed the dielectric breakdown threshold of the atmosphere inside the structure, dielectric breakdown can occur allowing electrical discharge to another part of the surface at lower potential. This phenomenon is called 'edge-glow'

When the fibre reinforced structure is a wing and the internal surface comprises part of an aircraft fuel tank, edge glow can potentially result in a fuel tank ignition which is a threat to the safety of an aircraft. For this reason there are stringent requirements for the management of this phenomenon.

According to the present invention there is provided a composite structure comprising one or more electrically conductive pathways and one or more isolators for isolating the pathways from the bulk of the structure, the structure comprising fibre reinforcement and a reinforcement resin matrix, said pathways being formed from said fibre reinforcement and said reinforcement resin matrix; wherein the pathways are discrete and the one or more isolators comprise discontinuities in the fibre reinforcement.

The pathways enable the protection of composite aircraft structures from electrical discharge phenomena such as edge glow by conducting the electricity away from critical parts. In addition the pathways enable control of the direction of electrical conductivity.

In an embodiment, the pathways are formed from the same fibre reinforcement and the same resin matrix as the fibre reinforcement and matrix of the bulk of the structure.

The introduction of one or more discontinuities into the fibres which connect a metal element of the composite structure which may be susceptible to lightning strike protects any internal surface from edge glow.

The isolators comprise discontinuities in the fibre reinforcement. The fibre discontinuities may be introduced in specific locations of a ply during the laminate layup process to form the composite structure. This is done in such as way so as to ensure that the distance between discontinuities is longer than the critical fibre length for the resin/fibre combination to avoid compromising mechanical properties.

The critical fiber length ($L_c$) is defined as

$$L_c = \frac{\sigma_f^* d}{2\tau_c}$$

wherein $\sigma_f*$ is the fiber ultimate tensile strength [Pa], d is the fiber diameter [m] and $\tau_c$ is either the matrix/fiber bond strength or the matrix shear yield strength (whichever is smaller) [Pa].

One dimension of the isolator which extends in the direction of the fibers may correspond to n x critical fibre length wherein n = 1 to 100, preferably n = 1 to 50, more preferably n = 1 to 10.

In a further embodiment of the invention, the isolators are formed by an isolator resin matrix.

In another embodiment of the invention, there is provided a method of controlling current paths in a composite structure comprising one or more discrete electrically conductive pathways in the structure, the structure comprising fibre reinforcement and a reinforcement resin matrix, said pathways being formed from said fibre reinforcement and said reinforcement resin matrix; said method comprising providing one or more isolators isolating the pathways from the bulk of the structure, said one or more isolators comprising discontinuities in the fibre reinforcement.

In a preferred embodiment, the composite structure is prepared from a lay-up of resin preimpregnated fibrous reinforcement material layers (or prepreg layers). The layers or plies are arranged to connect metallic elements directly to the internal surface of structure. One or more cuts are introduced in one or more plies to ensure that the pathway is isolated. The structure is then cured which results in the cut discontinuities or isolators being filled with resin.

The cut or discontinuity may be introduced in any conceivable way including slitting with a blade, laser cutting, stretching, ultrasonic disruption of the fibres. It may also be introduced automatically with attachments to robotic equipment such as ATL, AFP or other systems, or even by a manual operation.

During cure the resin from the composite flows into the cut and cures thereby forming a resilient insulative barrier to charge being conducted from the metallic element to the surface. This protects against edge glow. Several fibre discontinuites can be introduced per layer to either increase the efficacy of protection or to ensure that a safe zone is created which will accommodate tolerances in the position of the discontinuities relative to the protected surface introduced through tolerances in manufacturing due to trimming and drilling operations

Finally the composite structure may comprise other equipment for sensing or structural health monitoring.

## SPECIFIC DESCRIPTION

Specific embodiments of the invention will now be described by way of Example only and with reference to the accompanying drawings in which:

Figure 1 presents a diagrammatic plan view of a structure not according to an embodiment of the invention; and

Figure 2 presents a diagrammatic plan view of another structure according to an embodiment of the invention.

The present invention provides a composite structure comprising pathways for connecting connecting metallic elements to one another. The pathways are isolated from the bulk of the composite structure by means of isolators. These isolators are preferably formed by the reinforcement resin of the structure.

In aircraft, pathways may preferably be provided between mechanical fasteners and/or framing and/or LSP surface structures and/or engines and/or other metallic elements such as bond straps.

The pathways may be formed from conductive reinforcement fibers such as carbon fiber.

Alternatively, metallized fabrics and/or metallized fibers may be used. Examples of such fibers and/or fabrics will now be briefly disclosed. Diamond Fiber Composites (Cincinnati, Ohio) coats carbon fibers with a wide variety of metals including nickel, copper, silver, gold, palladium, platinum and metal hybrids (multilayer coatings) using a chemically based coating process that provides a uniform coating. These coated fibers may be obtained as continuous fiber lengths, chopped fibers, woven fabrics and nonwoven veils/mats.

Electro Fiber Technologies (Stratford, Conn.) offers single or dual metal hybrids coated onto carbon, graphite, glass, polyester and other synthetic fibers. The company supplies chopped fibers (down to 1 mm/0.04 inch in length) and continuous tows from 3K to 80K as well as nonwoven veils and mats.

Technical Fibre Products (Newburgh, N.Y.) supplies electrically conductive nonwoven mats and veils using carbon, nickel-coated carbon, aluminized glass, silicon carbide, stainless steel and nickel fibers.

Textile Products Inc. (Anaheim, Calif.) supplies a Style #4607 216 g/m2 carbon/aluminum hybrid fabric made with AS4-3K carbon fiber and aluminum wire. It also supplies a Style #4608 218 g/m2 hybrid with T650/35-3K carbon fiber and aluminum wire. Both are plain weaves, 14 mils thick and 107 cm/42 inches wide.

Varinit (Greenville, S.C.) supplies electrically conductive reinforcing fabrics, developing and manufacturing products to meet customer specifications.

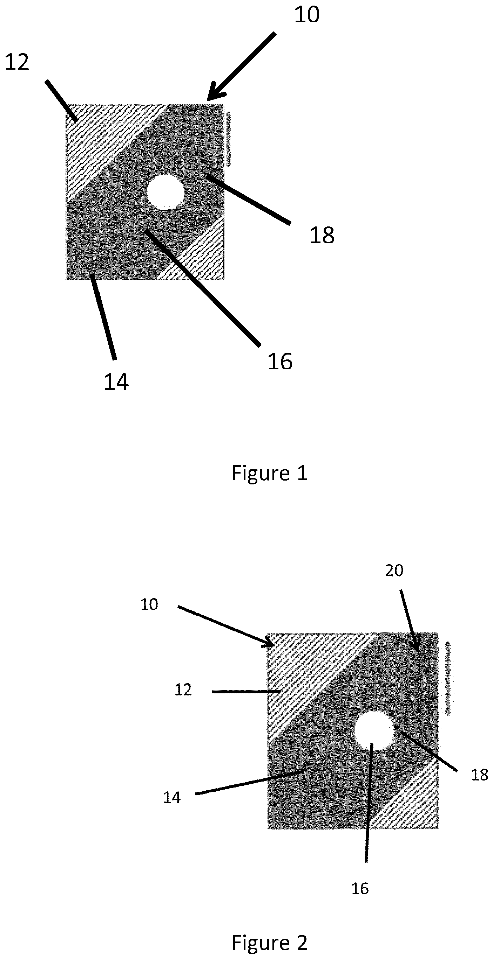

An embodiment of the invention is illustrated with respect to Figures 1 and 2. Figure 1 shows a composite structure 10 which consists of a lay-up of multiple unidirectional carbon fiber reinforcement layers 12,14,18 which are impregnated with a resin matrix to form prepregs. The prepreg layers consist of prepreg without a conducting surface material 12, prepreg with a conducting surface material in the form of an expanded copper foil (ECF) 14 and a prepreg with a continuous conducting layer 18 in the form of carbon fiber tows. A bolt hole 16 is drilled into the composite structure and is arranged such that a mechanical fastener inserted in the hole 16 is in direct contact with the layer 18. This allows currents due to a lightning strike on or near the fastener to be conducted away from the fastener.

In Figure 2, the reference numerals correspond to the same parts of Figure 1. Isolators 20 in the form of cuts of the carbon fiber tows 18 are present to control the direction of conduction of currents away from the fastener to a desired location in the composite structure to a point via which the current can be removed from the structure following a lightning strike.

The composite structure of Figure 2 may be formed by providing cuts into the reinforcement fiber tows. The cuts or discontinuities are introduced by laser cutting during the lay-up phase of the structure. Following lay-up as the resin cures, it flows into the gap and cures thereby forming a resilient insulative barrier to electrical charges and currents.

Several fibre discontinuites can be introduced per layer to either increase the efficacy of protection or to ensure that a safe zone is created which will accommodate tolerances in position of the discontinuities relative to the protected surface introduced through tolerances in manufacturing due to trimming and drilling operations.

The isolating discontinuities are several times the critical fiber length to ensure that the mechanical performance of the composite structure is not reduced.

The resin matrix as hereinbefore described may comprise any suitable resin including thermosets, thermoplastics or mixtures of the two. Preferably the resin is free from conductive ingredients which may accumulate in the fibre discontinuity and would reduce its isolating properties.

There is thus provided a structure and a method which enables effective control of electrical charges and/or currents in composite structures, particularly but not exclusively in composite aircraft or windenergy structures.

## Claims

1. A composite structure (10) comprising one or more electrically conductive pathways (18) and one or more isolators (20) for isolating the pathways (18) from the bulk of the structure (10), the structure (10) comprising fibre reinforcement and a reinforcement resin matrix, said pathways (18) being formed from said fibre reinforcement and said reinforcement resin matrix; wherein the pathways (18) are discrete and the one or more isolators (20) comprise discontinuities in the fibre reinforcement

2. A structure (10) according to claim 1, wherein the pathways (18) are formed from the same fibre reinforcement and the same resin matrix as the bulk of the structure.

3. A structure (10) according to claim 1 or claim 2, wherein the one or more isolators (20) are formed by an isolator resin matrix.

4. A structure (10) of claim 3, wherein the isolator resin matrix comprises the reinforcement resin matrix.

5. A structure (10) according to any of claims 1 to 4, wherein the structure (10) comprises multiple ply layers of fibre reinforcement, the one or more isolators (20) extending across at least two ply layers.

6. A structure (10) according to any of the preceding claims, wherein the length of the one or more isolators (20) corresponds to the n x critical fibre length wherein n = 1 to 10, preferably n = 1 to 5.

7. A structure (10) according to any of the preceding claims, wherein the conductive pathways are formed by unidirectional carbon fibre.

8. A structure according (10) to claim 8, wherein the carbon fibre is coated with a metal.

**9.** A method of controlling current paths in a composite structure comprising a one or more discrete electrically conductive pathways in the structure, the structure comprising fibre reinforcement and a reinforcement resin matrix, said pathways being formed from said fibre reinforcement and said reinforcement resin matrix; said method comprising providing one or more isolators isolating the pathways from the bulk of the structure, said one or more isolators comprising discontinuities in the fibre reinforcement.

**10.** A method of claim 9, wherein the composite structure is prepared from a lay-up of resin preimpregnated fibrous reinforcement material layers, the layers being arranged to connect metallic elements directly to the internal pathway of the structure.

**11.** A method according to any of claims 9 or 10, wherein, following cure, the one or more isolators comprise resin filled discontinuities.


## Patentansprüche

**1.** Verbundwerkstoffstruktur (10), die einen oder mehrere elektrisch leitfähige Pfade (18) und einen oder mehrere Isolatoren (20) zum Isolieren der Pfade (18) von dem Hauptteil der Struktur (10) umfasst, wobei die Struktur (10) eine Faserverstärkung und eine Verstärkungsharzmatrix umfasst, wobei die Pfade (18) von der Faserverstärkung und der Verstärkungsharzmatrix gebildet sind, wobei die Pfade (18) diskret sind und der eine oder die mehreren Isolatoren (20) Unterbrechungen in der Faserverstärkung aufweisen.

**2.** Struktur (10) nach Anspruch 1, wobei die Pfade (18) aus derselben Faserverstärkung und derselben Harzmatrix wie der Hauptteil der Struktur gebildet sind.

**3.** Struktur (10) nach Anspruch 1 oder Anspruch 2, wobei der eine oder die mehreren Isolatoren (20) durch eine Isolatorharzmatrix gebildet sind.

**4.** Struktur (10) nach Anspruch 3, wobei die Isolatorharzmatrix die Verstärkungsharzmatrix umfasst.

**5.** Struktur (10) nach einem der Ansprüche 1 bis 4, wobei die Struktur (10) Mehrlagenschichten der Faserverstärkung umfasst, wobei sich der eine oder die mehreren Isolatoren (20) über wenigstens Zweilagenschichten erstreckt.

**6.** Struktur (10) nach einem der vorhergehenden Ansprüche, wobei die Länge des einen oder der mehreren Isolatoren (20) n × kritische Faserlänge entspricht, wobei n = 1 bis 10, bevorzugt n = 1 bis 5 gilt.

**7.** Struktur (10) nach einem der vorhergehenden Ansprüche, wobei die leitfähigen Pfade durch unidirektionale Kohlenstofffaser gebildet sind.

**8.** Struktur (10) nach Anspruch 8, wobei die Kohlenstofffaser mit einem Metall beschichtet ist.

**9.** Verfahren zum Steuern von Strompfaden in einer Verbundwerkstoffstruktur, die einen oder mehrere diskrete elektrisch leitfähige Pfade in der Struktur umfasst, wobei die Struktur eine Faserverstärkung und eine Verstärkungsharzmatrix umfasst, wobei die Pfade von der Faserverstärkung und der Verstärkungsharzmatrix gebildet sind; wobei das Verfahren Bereitstellen eines oder mehrerer Isolatoren umfasst, die die Pfade von dem Hauptteil der Struktur isolieren, wobei der eine oder die mehreren Isolatoren Unterbrechungen in der Faserverstärkung umfassen.

**10.** Verfahren nach Anspruch 9, wobei die Verbundwerkstoffstruktur aus einem Gelege aus mit Harz vorimprägnierten Faserverstärkungsmaterialschichten vorbereitet ist, wobei die Schichten dazu eingerichtet sind, metallische Elemente direkt mit dem internen Pfad der Struktur zu verbinden.

**11.** Verfahren nach einem der Ansprüche 9 oder 10, wobei der eine oder die mehreren Isolatoren anschließend an das Aushärten mit Harz gefüllte Unterbrechungen umfassen.


## Revendications

**1.** Structure composite (10) comprenant un ou plusieurs chemins électriquement conducteurs (18) et un ou plusieurs isolateurs (20) pour isoler les chemins (18) de la masse de la structure (10), la structure (10) comprenant un renforcement de fibres et une matrice de résine de renforcement, lesdits chemins (18) étant formés à partir dudit renforcement de fibres et de ladite matrice de résine de renforcement ; dans laquelle les chemins (18) sont discrets et le ou les isolateurs (20) comprennent des discontinuités dans le renforcement de fibres.

**2.** Structure (10) selon la revendication 1, dans laquelle les chemins (18) sont formés à partir du même renforcement de fibres et de la même matrice de résine que la masse de la structure.

**3.** Structure (10) selon la revendication 1 ou la revendication 2, dans laquelle le ou les isolateurs (20) sont formés par une matrice de résine d'isolateur.

**4.** Structure (10) de la revendication 3, dans laquelle la matrice de résine d'isolateur comprend la matrice de résine de renforcement.

**5.** Structure (10) selon l'une quelconque des revendications 1 à 4, la structure (10) comprenant de multiples couches de renforcement de fibres, le ou les isolateurs (20) s'étendant à travers au moins deux couches.

**6.** Structure (10) selon l'une quelconque des revendications précédentes, dans laquelle la longueur du ou des isolateurs (20) correspond à n $\times$ longueur critique de fibre, où n = 1 à 10, de préférence n = 1 à 5.

**7.** Structure (10) selon l'une quelconque des revendications précédentes, dans laquelle les chemins conducteurs sont formés par une fibre de carbone unidirectionnelle.

**8.** Structure (10) selon la revendication 8, dans laquelle la fibre de carbone est enrobée avec un métal.

**9.** Procédé de contrôle de chemins de courant dans une structure composite comprenant un ou plusieurs chemins électriquement conducteurs discrets dans la structure, la structure comprenant un renforcement de fibres et une matrice de résine de renforcement, lesdits chemins étant formés à partir dudit renforcement de fibres et de ladite matrice de résine de renforcement ; ledit procédé comprenant l'obtention d'un ou plusieurs isolateurs isolant les chemins de la masse de la structure, ledit ou lesdits isolateurs comprenant des discontinuités dans le renforcement de fibres.

**10.** Procédé de la revendication 9, dans lequel la structure composite est préparée à partir d'une superposition de couches de matériau de renforcement fibreux préimprégné de résine, les couches étant agencées pour relier des éléments métalliques directement au chemin interne de la structure.

**11.** Procédé selon l'une quelconque des revendications 9 et 10 dans lequel, après durcissement, le ou les isolateurs comprennent des discontinuités remplies de résine.

Figure 1

Figure 2

**EP 3 083 231 B1**

**REFERENCES CITED IN THE DESCRIPTION**

**Patent documents cited in the description**

- WO 2010035021 A
- WO 2011114140 A